# DEMANDE DE BREVET EUROPEEN

(11) **EP 4 765 658 A1**
(43) Date de publication de la demande: **24.06.2026**
(21) Numéro de dépôt: 25225873.6
(22) Date de dépôt: 19.12.2025
(51) Int. Cl.: H04B 7/04, H04W 24/02

(54) **ÉQUIPEMENT TERMINAL A SYSTÈME D'ANTENNE CONFIGURABLE**

(30) Priorité: 20.12.2024 FR 2414854
(71) Demandeur: SAGEMCOM BROADBAND SAS, 92270 Bois-Colombes (FR)
(72) Inventeur: JAULIN, Jean-Philippe, 92270 BOIS-COLOMBES (FR); JEGONDAY, Yves, 92270 BOIS-COLOMBES (FR); BEZZINA, Tatiana, 92270 BOIS-COLOMBES (FR)
(74) Mandataire: Cabinet Boettcher

(57) **Abrégé**

Procédé de gestion d'un équipement terminal (1) comprenant un système d'antenne (6) pouvant être configuré selon au moins une première configuration et une deuxième configuration présentant des performances de communication dégradées sur au moins une bande de fréquences particulière, le procédé de gestion comportant les étapes suivantes :
- détecter au moins une cellule utilisable (Cu) ;
- déterminer si au moins une cellule utilisable particulière, parmi la au moins une cellule utilisable (Cu), utilise au moins partiellement la bande de fréquences particulière ;
- si c'est le cas, et si le système d'antenne (6) est configuré selon la deuxième configuration, réaliser une action ayant pour but de faire passer le système d'antenne (6) dans la première configuration.

## Description

L'invention concerne le domaine des équipements terminaux de réseaux cellulaires, tels que des passerelles cellulaires.

### ARRIERE PLAN DE L'INVENTION

Une passerelle d'accès à Internet via réseau cellulaire (appelée ici « passerelle cellulaire »), ou *Fixed Wireless Access Internet gateway* en anglais, est, classiquement, capable de communiquer avec un réseau cellulaire d'un opérateur en utilisant différentes bandes de fréquences.

Or, la mise en œuvre d'une bande de fréquences dans un dispositif de communication sans-fil implique l'utilisation d'au moins une antenne adaptée à cette bande de fréquences. Les dimensions géométriques d'une antenne sont directement dépendantes de sa bande de fréquences de travail. Ces dimensions s'accroissent lorsque la fréquence décroit, de sorte que, par exemple, une antenne adaptée à la mise en œuvre d'une communication à 700 MHz aura des dimensions plus grandes qu'une antenne de même type adaptée à la mise en œuvre d'une communication à 2400 MHz.

Dès lors qu'un dispositif de communication impose la mise en œuvre d'un réseau d'antennes, par exemple une communication de type MIMO (pour *Multiple Input Multiple Output),* il est nécessaire d'assurer une isolation de chaque antenne par rapport aux autres antennes du même réseau pour permettre une décorrélation des signaux exploités par chaque antenne. Cette isolation se traduit par l'usage de multiples orientations, polarisations, mais avant tout de distance entre les antennes d'un réseau. Comme pour l'antenne en elle-même, la distance entre les antennes pour assurer une valeur minimale d'isolation s'accroit à mesure que la fréquence diminue.

On comprend donc que, pour qu'un dispositif de communication sans-fil fonctionne de manière optimale, il est avantageux de pouvoir faire varier la configuration du système d'antenne (et par exemple sa configuration géométrique / dimensionnelle) pour l'adapter à la bande de fréquences utilisée. Le système d'antenne du dispositif de communication sans-fil comprend par exemple une seule antenne ou bien un réseau antennaire de plusieurs antennes.

Il est ainsi connu d'utiliser des antennes de taille variable, comme celles des récepteurs de radiophonie historiques dont le brin extensible et orientable permet une adaptation manuelle au besoin. Ce type d'antenne, muni de deux brins, est également utilisé dans certains téléviseurs.

Il est également connu d'exploiter un système d'antenne dont le nombre d'antenne(s) est susceptible de varier en fonction des conditions locales d'exploitation d'un équipement radiofréquence. On connaît ainsi une passerelle cellulaire intégrant un dispositif d'antenne interne (comprenant une ou des antennes), et pouvant être connectée à un dispositif d'antenne externe amovible (comprenant une ou des antennes). Le dispositif d'antenne interne est suffisant dans la majorité des cas, mais l'utilisation du dispositif d'antenne externe est très avantageuse dans les conditions difficiles de communication. Le système d'antenne utilisé peut donc être configuré selon une première configuration dans laquelle il comprend le dispositif d'antenne interne et le dispositif d'antenne externe, et selon une deuxième configuration dans laquelle il comprend uniquement le dispositif d'antenne interne. Le passage de l'une à l'autre des configurations est à la charge de l'utilisateur au regard de sa propre compréhension de son environnement.

Idéalement, lorsque la passerelle cellulaire est munie d'un système d'antenne configurable, l'utilisateur devrait configurer le système d'antenne pour optimiser les performances de la passerelle cellulaire et donc les communications dans le réseau cellulaire. La configuration devrait aussi être faite en fonction de l'exploitation, ou non, de certaines bandes de fréquences par le réseau de l'opérateur en charge de la communication. En effet, il est inutile de mettre en œuvre une configuration plus complexe ou plus encombrante d'un système d'antenne lorsque cela n'est pas nécessaire pour obtenir certaines performances, ou bien lorsque la bande de fréquences correspondant à cette configuration n'est pas exploitée par l'opérateur dans la zone d'utilisation de l'utilisateur.

Cependant, aucune indication n'est donnée à l'utilisateur pour l'aider dans le choix de la configuration du système d'antenne.

Cette situation laisse une large de part de subjectivité pour un utilisateur non averti dans le choix de la meilleure action à engager pour lui permettre de profiter pleinement de sa passerelle cellulaire dans les conditions locales d'utilisation. Cela se traduit, très fréquemment, par l'utilisation de la passerelle cellulaire avec des performances dégradées.

### OBJET DE L'INVENTION

L'invention a pour objet d'améliorer les performances de communication d'une passerelle cellulaire qui utilise un système d'antenne configurable.

### RESUME

En vue de la réalisation de ce but, on propose un procédé de gestion d'un équipement terminal d'un réseau cellulaire prédéfini, l'équipement terminal comprenant une unité de traitement agencée pour coopérer avec un système d'antenne pouvant être configuré selon au moins une première configuration et une deuxième configuration, la deuxième configuration présentant des performances de communication dégradées sur au moins une bande de fréquences particulière, le procédé de gestion étant mis en œuvre dans l'unité de traitement et comportant les étapes de configuration suivantes :
- détecter au moins une cellule utilisable pouvant être utilisée pour connecter l'équipement terminal au réseau cellulaire prédéfini ;
- déterminer si au moins une cellule utilisable particulière, parmi la au moins une cellule utilisable, utilise au moins partiellement la bande de fréquences particulière ;
- si c'est le cas, et si le système d'antenne est configuré selon la deuxième configuration, réaliser une action ayant pour but de faire passer le système d'antenne dans la première configuration.

Ainsi, dès lors que l'unité de traitement de l'équipement terminal détecte au moins une cellule utilisable *(suitable cell)* qui utilise la bande de fréquences particulière, l'unité de traitement réalise une action visant à configurer et/ou faire configurer le système d'antenne selon la première configuration (sauf si le système d'antenne se trouve déjà dans la première configuration). Cette action peut par exemple consister à notifier l'utilisateur qu'une modification de la configuration du système d'antenne serait préférable.

On assure ainsi que, quelle que soit la cellule avec laquelle l'équipement terminal se synchronise (à l'instant présent ou dans le futur), le système d'antenne de la passerelle est/sera configuré pour que l'équipement terminal fonctionne de manière optimale - ou, tout au moins, que l'utilisateur a connaissance de la pertinence de cette reconfiguration.

Dans un mode de réalisation, la au moins une première configuration et deuxième configuration correspondent à :
- un système d'antenne replié ou déplié, ou
- des configurations géométriques ou dimensionnelles différentes, ou
- une connexion ou non d'une ou de plusieurs antennes, via un ou des interrupteurs, sans modification géométrique ou dimensionnelle du système d'antenne, ou
- une connexion ou non d'un dispositif d'antenne externe amovible à l'équipement terminal, ou
- des régimes d'amplification différents d'amplificateurs d'une chaîne radiofréquence du système d'antenne.

On propose de plus un procédé de gestion tel que précédemment décrit, comprenant une phase préliminaire au cours de laquelle les étapes de configuration sont mises en œuvre, la phase préliminaire comprenant en outre l'étape de synchroniser l'équipement terminal avec le réseau cellulaire en utilisant l'une des cellules utilisables.

On propose de plus un procédé de gestion tel que précédemment décrit, dans lequel, au cours de la phase préliminaire, l'unité de traitement réalise un balayage de fréquences pour détecter la au moins une cellule utilisable.

On propose de plus un procédé de gestion tel que précédemment décrit, dans lequel la bande de fréquences particulière est une bande de basses fréquences, et dans lequel, au cours de la phase préliminaire, l'unité de traitement est agencée pour :
- déterminer si le système d'antenne est configuré selon la première configuration ou la deuxième configuration ;
- si le système d'antenne est configuré selon la première configuration, réaliser le balayage de fréquence selon des fréquences croissantes ;
- si le système d'antenne est configuré selon la deuxième configuration, réaliser le balayage de fréquence selon des fréquences décroissantes.

On propose de plus un procédé de gestion tel que précédemment décrit, comprenant de plus les étapes de détecter qu'un utilisateur a volontairement modifié la configuration du système d'antenne et, si c'est le cas, de lui transmettre une notification pour lui proposer de réitérer la phase préliminaire.

On propose de plus un procédé de gestion tel que précédemment décrit, dans lequel le balayage de fréquence réalisé au cours de la réitération de la phase préliminaire utilise une liste de cellules utiles détectées au cours d'une phase préliminaire précédente.

On propose de plus un procédé de gestion tel que précédemment décrit, comprenant au moins une phase courante au cours de laquelle les étapes de configuration sont mises en œuvre, l'unité de traitement détectant au moins une cellule utilisable en exploitant au moins une information provenant du réseau cellulaire.

On propose de plus un procédé de gestion tel que précédemment décrit, la au moins une phase courante comprenant une première phase courante au cours de laquelle la au moins une information comprend une demande de transfert intercellulaire vers une cellule cible du réseau cellulaire.

On propose de plus un procédé de gestion tel que précédemment décrit, la au moins une phase courante comprenant une deuxième phase courante au cours de laquelle la au moins une information comprend une information indiquant la présence d'au moins une cellule voisine du réseau cellulaire située dans une même zone géographique que l'équipement terminal.

On propose de plus un procédé de gestion tel que précédemment décrit, dans lequel le balayage de fréquence réalisé au cours de la réitération de la phase préliminaire utilise des informations obtenues au cours d'une deuxième phase précédente.

On propose de plus un procédé de gestion tel que précédemment décrit, dans lequel l'action comprend la transmission d'une notification à un utilisateur de l'équipement terminal pour l'inviter à configurer le système d'antenne selon la première configuration.

On propose de plus un équipement terminal comportant une unité de traitement agencée pour coopérer avec un système d'antenne pouvant être configuré selon au moins une première configuration et une deuxième configuration, la deuxième configuration présentant des performances de communication dégradées sur au moins une bande de fréquence particulière, le procédé de gestion tel que précédemment décrit étant mis en œuvre dans l'unité de traitement.

On propose de plus un équipement terminal tel que précédemment décrit, comprenant un capteur de position agencé pour détecter si le système d'antenne est configuré selon la première configuration ou selon la deuxième configuration.

On propose de plus un équipement terminal tel que précédemment décrit, l'équipement terminal étant une passerelle cellulaire.

On propose de plus un système comportant l'équipement terminal tel que précédemment décrit, et le système d'antenne.

On propose de plus un système tel que précédemment décrit, le système d'antenne étant intégré dans l'équipement terminal.

On propose de plus un système tel que précédemment décrit, le système d'antenne comprenant au moins une antenne non intégrée dans l'équipement terminal et agencée pour être connectée à l'équipement terminal.

On propose de plus un programme d'ordinateur comprenant des instructions qui conduisent l'unité de traitement de l'équipement terminal tel que précédemment décrit à exécuter les étapes du procédé de gestion tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés parmi lesquels :
[Fig. 1] la figure 1 représente une passerelle cellulaire et le réseau cellulaire ;
[Fig. 2] la figure 2 représente des étapes d'une phase préliminaire ;
[Fig. 3] la figure 3 représente des étapes d'une première phase courante ;
[Fig. 4] la figure 4 représente des étapes d'une deuxième phase courante ;
[Fig. 5] la figure 5 représente des étapes mises en œuvre lorsque l'indicateur ANTENNE_A_DEPLIER prend la valeur « VRAI » ;
[Fig. 6] la figure 6 représente des étapes mises en œuvre en cas de dépliement ou repliement volontaire par l'utilisateur du système d'antenne.

### DESCRIPTION DETAILLEE

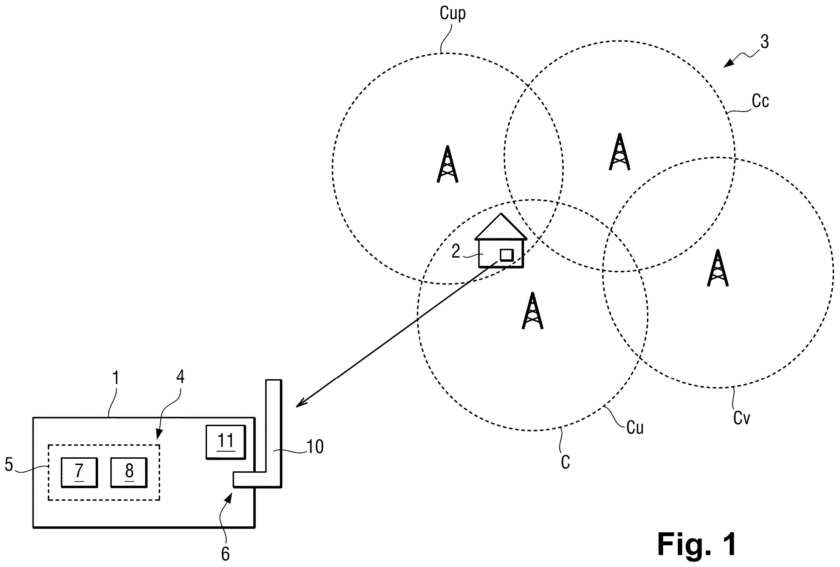

En référence à la figure 1, un équipement terminal 1, en l'occurrence ici une passerelle cellulaire 1, est installé dans l'habitation 2 d'un utilisateur et est destiné à être connecté au réseau cellulaire 3 d'un opérateur, pour fournir un accès Internet aux équipements connectés de l'utilisateur. Le réseau cellulaire 3, qui comprend des cellules C, opère par exemple selon le standard 4G / LTE.

La passerelle cellulaire 1 comporte un dispositif de communication 4 comprenant une unité de traitement 5 et un système d'antenne 6.

L'unité de traitement 5 (électronique et logicielle) comprend au moins un composant de traitement 7, qui est par exemple un processeur « généraliste », un processeur spécialisé dans le traitement du signal (ou DSP, pour *Digital Signal Processor),* un processeur spécialisé pour les algorithmes d'intelligence artificielle (de type NPU, pour *Neural Processing Unit),* un microcontrôleur, ou bien un circuit logique programmable tel qu'un FPGA (pour *Field Programmable Gate Arrays)* ou un ASIC (pour *Application Specific Integrated Circuit) .*

L'unité de traitement 5 comprend aussi une ou des mémoires 8, reliées à ou intégrées dans le composant de traitement 7. Au moins l'une de ces mémoires 8 forme un support d'enregistrement lisible par ordinateur, sur lequel est enregistré au moins un programme d'ordinateur dit logiciel applicatif comprenant des instructions qui conduisent le composant de traitement 7 à exécuter au moins certaines des étapes des différentes phases du procédé de gestion qui va être décrit.

Le système d'antenne 6 est utilisé par la passerelle cellulaire 1 pour communiquer avec le réseau cellulaire 3. Le système d'antenne 6 est ici intégré à la passerelle cellulaire 1.

Le système d'antenne 6 peut être configuré selon au moins une première configuration et une deuxième configuration, la deuxième configuration présentant des performances de communication dégradées sur au moins une bande de fréquences particulière.

Dans un mode de réalisation, le changement de configuration est une modification géométrique ou dimensionnelle du système d'antenne.

Ici, la bande de fréquences particulière comprend des basses fréquences, typiquement inférieures à 1000 MHz, plus particulièrement inférieures à 900 MHz.

Dans d'autres exemples de réalisation, on pourra considérer que le réseau cellulaire opère selon un standard de la norme 5G. De manière connue, ce standard prévoit plusieurs bandes de fréquences basses centrées respectivement autour de 700 MHz, 800 MHz, 900 MHz, 1,8 GHz, 2,1 GHz et 2,6 GHz, une bande de fréquences intermédiaires comprises entre 3,4 GHz et 3,8 GHz et une bande de hautes fréquences comprises entre 24,25 GHz et 27,5 GHz dite bande millimétrique.

Dans d'autres exemples de réalisation, le réseau cellulaire 3 opère selon plusieurs standards qui coexistent. Par exemple, un sous-ensemble de cellules C du réseau cellulaire 3 sont opérées selon un standard de la norme 4G, et un autre sous-ensemble de cellules C du réseau cellulaire 3 sont opérés selon un standard de la norme 5G.

Le système d'antenne 6 comprend ici une antenne 10 ou un réseau d'antennes 10 (ci-après désigné par antenne 10) pouvant être dépliée ou repliée. La forme de l'antenne 10 représentée en figure 1 ne correspond pas à sa forme réelle. Le système d'antenne 6 peut en outre comprendre un ou plusieurs autres sous-systèmes d'antennes, dont les géométries respectives sont fixes dans des positions où elles sont aptes à transmettre et recevoir sur leurs bandes de fréquences de fonctionnement de manières optimales.

Dans la première configuration, l'antenne 10 est dépliée. Lorsque l'antenne 10 est dépliée, l'ensemble des bandes de fréquences exploitables par le dispositif de communication 4 de la passerelle 1 est disponible et les performances de transmission/réception sont optimales sur l'ensemble du spectre prévu par la géométrie dépliée de l'antenne 10. En particulier, le gain du système d'antenne 6 couvre l'ensemble des bandes de fréquences de manière optimale. Dans cette position, l'ensemble des canaux utilisables par la passerelle 1 le sont dans les conditions optimales. En position dépliée, l'antenne 10 est adaptée à la transmission et à la réception des signaux pour l'ensemble des bandes de fréquences mises en œuvre par la passerelle 1.

Dans la deuxième configuration, l'antenne 10 est repliée. Dans ce cas, le système d'antenne 6 ne permet de couvrir qu'une partie du spectre de manière optimale (ici, la partie haute du spectre), et du fait de dimensions réduites, une partie basse du spectre n'est que partiellement exploitable car le système d'antenne 6 n'est pas à même de proposer un gain suffisant (et/ou une isolation suffisante entre les antennes, si le système 6 comprenait plusieurs antennes). Dans cette position repliée, on peut considérer que le signal électrique, transmis à un équipement de l'utilisateur via la passerelle 1, peut ne pas être suffisant pour permettre le décodage d'un signal qui pourrait l'être alors que l'antenne 10 du système d'antenne 6 serait dépliée. L'inadaptation de l'antenne 10 à cette bande de fréquences provoque une diminution de son gain et, notamment, le niveau du signal électrique reçu se trouve réduit ainsi que le rapport signal à bruit, affectant ainsi le décodage d'un signal qui aurait pu l'être si l'antenne était dépliée.

Dans cette position repliée, une partie des canaux fréquentiels est couverte de manière dégradée du fait des piètres performances du système d'antenne 6. Dans la position repliée, l'antenne 10 est adaptée à la transmission et à la réception des signaux pour un premier sous-ensemble des bandes de fréquences mises en œuvre par la passerelle 1, et présente au moins une lacune dans son adaptation à la transmission et à la réception des signaux pour un second sous-ensemble des bandes de fréquences mises en œuvre par la passerelle 1.

Le dispositif de communication 4 de la passerelle cellulaire 1 comporte de plus des moyens de détection agencés pour détecter la configuration du système d'antenne 6 (antenne 10 dépliée ou repliée).

Les moyens de détection comportent ici un capteur de position 11 qui est relié à l'unité de traitement 5. Le capteur de position 11 produit un signal électrique représentatif de la configuration du système d'antenne.

Le capteur de position 11 est par exemple un microcontact électrique actionné par une partie mobile du système d'antenne 6 lorsque l'antenne 10 du système d'antenne 6 est complètement dépliée. Le capteur de position 11 pourrait être un quelconque autre capteur de position qui génère un signal électrique exploitable par l'unité de traitement 5.

Le procédé de gestion, qui est mis en œuvre dans l'unité de traitement 5, comporte les étapes de configuration suivantes :
- détecter au moins une cellule utilisable Cu pouvant être utilisée pour connecter la passerelle cellulaire 1 à un réseau cellulaire prédéfini, qui est ici le réseau 3 de l'opérateur ;
- déterminer si au moins une cellule utilisable particulière Cup, parmi la au moins une cellule utilisable Cu, utilise au moins partiellement la bande de fréquences particulière ;
- si c'est le cas, et si le système d'antenne 6 est configuré selon la deuxième configuration, réaliser une action ayant pour but de faire passer le système d'antenne 6 dans la première configuration (antenne 10 dépliée).

Comme on va le voir, ces étapes de configuration peuvent être mises en œuvre au cours de différentes phases de fonctionnement de la passerelle cellulaire 1.

L'unité de traitement 5 utilise des indicateurs pour réaliser ces différentes phases.

L'indicateur « ANTENNE_A_DEPLIER » peut prendre la valeur « VRAI » ou la valeur « FAUX ». Cet indicateur met en évidence l'existence d'une cellule utilisable Cu (pour *« suitable cell* ») du réseau cellulaire 3 dans l'horizon local de la passerelle cellulaire 1 qui nécessite potentiellement que l'antenne 10 soit dépliée pour être exploitée dans les meilleures conditions.

Par cellule utilisable Cu, on entend une cellule C de l'opérateur du réseau cellulaire 3, sur laquelle la passerelle cellulaire 1 est capable de se synchroniser de manière à fonctionner avec des performances nominales.

Une « *suitable cell* » au sens de la normalisation 3GPP est une cellule utilisable par l'équipement utilisateur *(User Equipment* UE) avec un service complet. Il s'agit donc d'une cellule gérée par le réseau de l'opérateur auquel l'utilisateur de la passerelle 1 est abonné. Cela sous-entend que la passerelle 1 capte un signal suffisant de cette cellule pour être à même de décoder l'ensemble des informations de la cellule.

La « *suitable cell* » est différente d'une « *acceptable cell* » également définie par la norme, pour laquelle la passerelle 1 est également en mesure de décoder l'ensemble des informations, mais ne pourra pas accéder à l'ensemble des fonctionnalités. Il s'agit par exemple des cellules gérées par des opérateurs tiers qui pourront être utilisées de manière limitée, par exemple pour passer un appel d'urgence.

L'indicateur « CELLULES_UTILISABLES » peut prendre la valeur « EN_COURS » ou la valeur « VIDE » ou la valeur « PLEIN ». Il met en évidence la présence d'au moins une cellule utilisable Cu dans l'horizon local.

On s'intéresse tout d'abord à une phase préliminaire P0, qui est mise en œuvre au démarrage de la passerelle cellulaire 1.

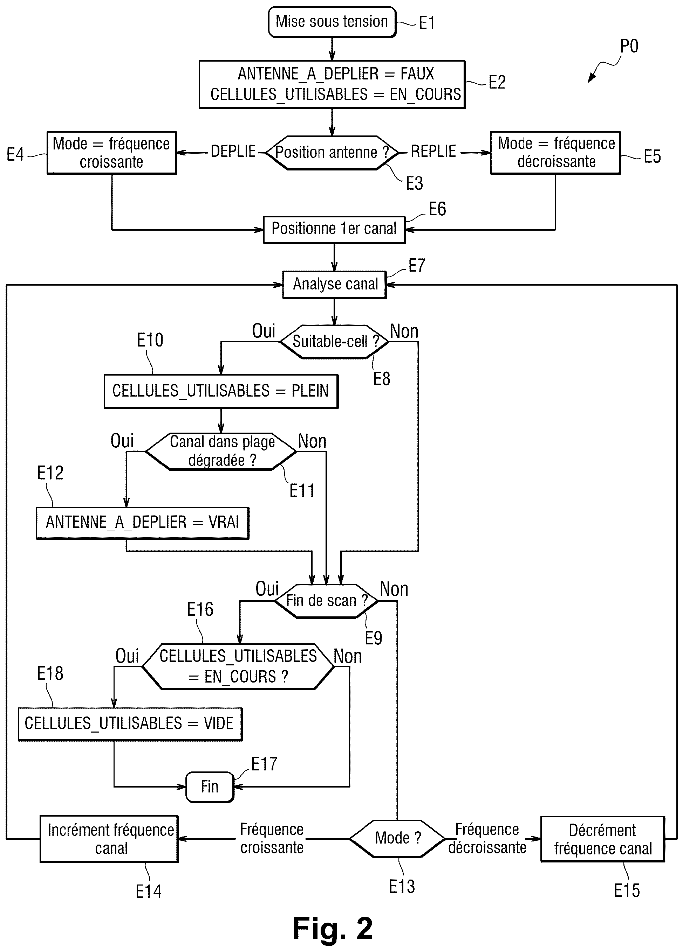

En référence à la figure 2, cette phase préliminaire P0 débute par une étape E1 au cours de laquelle la passerelle cellulaire 1 est mise sous tension. Alternativement, l'étape E1 correspond à une action délibérée visant à configurer la passerelle cellulaire 1 en vue de son raccordement au réseau cellulaire 3.

Puis, l'indicateur « ANTENNE_A_DEPLIER » est initialisé à la valeur « FAUX » et l'indicateur « CELLULES UTILISABLES » est initialisé à la valeur « EN_COURS » : étape E2.

L'unité de traitement 5 utilise alors le capteur 11 pour déterminer la configuration du système d'antenne 6 : première configuration (antenne 10 dépliée) ou deuxième configuration (antenne 10 repliée) : étape E3.

Avantageusement, la liste des fréquences et des canaux correspondants utilisables par la passerelle 1 sera renseignée dans une mémoire permanente (incluse dans la ou les mémoires 8), sous forme d'une table par exemple, pour permettre au logiciel applicatif de connaitre à chaque instant la performance prévisible du système d'antenne 6 pour un canal en fonction de la configuration du système d'antenne 6. Cette table sera renseignée, par exemple lors de la fabrication de la passerelle cellulaire 1, et contiendra pour chaque canal fréquentiel exploitable par la passerelle cellulaire 1, au minimum une information relative à la performance du système d'antenne 6 en position repliée. Cette information pourra prendre la forme d'une valeur binaire (NORMAL / DEGRADE) selon que le système d'antenne 6 en position repliée aura des performances optimales ou dégradées à la fréquence considérée.

L'unité de traitement 5 va alors tenter de détecter au moins une cellule utilisable Cu pouvant être utilisée pour connecter la passerelle cellulaire 1 au réseau cellulaire 3.

Pour cela, l'unité de traitement 5 réalise un balayage de fréquence ou de bande de fréquences pour détecter la au moins une cellule utilisable Cu (on parle aussi de *cell scan* ou *cell search* pour désigner cette opération).

Comme on l'a vu, si le système d'antenne 6 est configuré selon la première configuration, alors le dispositif de communication 4 offre des performances maximales sur l'ensemble du spectre fréquentiel.

Dans ce cas, le balayage de fréquence est mis en œuvre selon des fréquences croissantes (étape E4). Ainsi, le balayage est réalisé en balayant les fréquences exploitables à partir du bas du spectre, privilégiant ainsi la découverte de cellules offrant une grande portée.

Par exemple, ce balayage de fréquence sera d'abord fait à partir des bandes de plus basses fréquences vers les bandes de fréquences les plus hautes telles que définies par le standard LTE dans la spécification 3GPP TS 36.101 V18.7.0 section 5.5, table 5.5-1 *E-UTRA operating bands.* Par exemple certaines bandes parmi les bandes 12, 17, 13, 14, 20, 26, 18, 19 seront d'abord balayées, puis les bandes aux alentours de 2100 MHz, puis les bandes aux alentours de 2600 MHz, puis les bandes aux alentours de 3500 MHz. Dans un exemple, ce balayage de fréquence est opéré par le système d'antenne 6 avec l'antenne 10 et le ou les autres sous-systèmes d'antenne, et piloté par l'unité de traitement 5.

Pour un réseau cellulaire de type 5G, l'ordre de balayage dans ce cas de figure est choisi selon les bandes basses du spectre selon le document 3GPP 38.101-1 V18.7.0 section 5.

Par contre, si le système d'antenne 6 est configuré selon la deuxième configuration, alors le dispositif de communication 4 offre des performances dégradées dans une partie de son spectre.

Dans ce cas, le balayage de fréquence est mis en œuvre selon des fréquences décroissantes (étape E5). La phase de *cell scan* est réalisée en balayant les fréquences les moins impactées par les performances dégradées du système d'antenne 6 dans l'état replié, privilégiant ainsi la découverte de cellules exploitables par le système d'antenne 6.

La passerelle cellulaire 1, qui est capable par exemple de fonctionner dans les bandes de fréquences 3.5 GHz, 2.1 GHz et 700 MHz, réalise donc l'analyse en commençant depuis la partie haute du spectre dont les performances ne sont pas impactées par le repliement du système d'antenne 6 et en diminuant progressivement la fréquence des canaux jusqu'à avoir parcouru la totalité des bandes de fréquences jusqu'à celle du canal le plus bas. L'ordre de balayage peut être donné selon le document 3GPP 36.101-1 V18.7.0 pour le LTE ou selon le document 3GPP 38.101 V18.7.0 pour la 5G.

L'unité de traitement 5, suite à l'étape E3, débute donc le balayage de fréquence en se positionnant sur un premier canal (étape E6) et en commençant par l'analyse du premier canal (étape E7). L'unité de traitement 5 analyse ce premier canal et vérifie s'il y a une cellule utilisable Cu sur ce canal (étape E8). Si ce n'est pas le cas, le procédé passe à l'étape E9 qui est décrite ci-après.

Si c'est le cas, l'unité de traitement 5 confère à l'indicateur « CELLULES UTILISABLES » la valeur « PLEIN » (étape E10).

L'unité de traitement 5 signifie au système l'existence de la cellule utilisable Cu dans l'horizon local. Certaines caractéristiques de cette cellule utilisable sont mémorisées dans une liste de cellules utilisables. Parmi ces caractéristiques peuvent figurer : E-UTRA *Absolute Radio Frequency Channel Number* ou EARFCN, l'alignement temporel ou *timing downlink,* le niveau de réception des signaux des canaux communs de cette cellule utilisable, certaines informations comprises dans les *Master Information Block* (MIB) appartenant au *System Information Block* (SIB), etc.

L'unité de traitement 5 détermine si la cellule utilisable est une cellule utilisable particulière Cup qui utilise au moins partiellement la bande de fréquences particulière (ici les basses fréquences) : étape E11.

Si ce n'est pas le cas, le procédé passe à l'étape E9.

Si c'est le cas, l'unité de traitement 5 confère à l'indicateur « ANTENNE_A_DEPLIER » la valeur « VRAIE » (étape E12).

Ainsi, si à un moment du processus d'analyse par l'unité de traitement 5 des informations qu'elle reçoit, une cellule analysée apparait comme étant une cellule utilisable et que la fréquence de son canal apparait comme appartenant à une plage de fréquences aux performances dégradées par le repliement de l'antenne 10 du système d'antenne 6 (il s'agit **d'une** « cellule utilisable particulière »), alors un indicateur est positionné pour signifier au système qu'au moins une cellule dans l'horizon local à portée théorique radio met en œuvre une fréquence qui pour être pleinement exploitée, nécessite le dépliement du système d'antenne **6.**

Le procédé passe à l'étape E9.

A l'étape E9, l'unité de traitement 5 vérifie si le balayage est terminé.

Si ce n'est pas le cas, l'unité de traitement 5 vérifie si le système d'antenne 6 se trouve dans la première configuration ou la deuxième configuration (étape E13). Si le système d'antenne se trouve dans la première configuration, l'unité de traitement 5 incrémente la fréquence du canal, ou sélectionne une bande de fréquences dont les fréquences sont supérieures à celles qui ont déjà été balayées, à analyser (étape E14), et le procédé passe à l'étape E7. Si le système **d'antenne** 6 se trouve dans la deuxième configuration, l'unité de traitement 5 décrémente la fréquence du canal, ou sélectionne une bande de fréquences dont les fréquences sont inférieures à celles qui ont déjà été balayées, à analyser (étape E15), et le procédé passe à l'étape E7.

A l'étape E9, si le balayage est terminé, l'unité de traitement 5 vérifie si l'indicateur CELLULES UTILISABLES a pour valeur « EN_COURS » (étape E16).

Si ce n'est pas le cas, le procédé passe à l'étape E17 et s'achève.

Si c'est le cas, l'unité de traitement 5 confère à l'indicateur CELLULES UTILISABLES la valeur « VIDE » (étape E18). Le procédé passe à l'étape E17 et s'achève. Ainsi, si le processus d'analyse mis en œuvre par l'unité de traitement 5 a atteint la fréquence du dernier canal exploitable sans avoir décelé de cellule utilisable, l'unité de traitement 5 utilise cette valeur de l'indicateur « CELLULES UTILISABLES » pour signifier au système l'absence de cellule utilisable dans l'horizon local.

A la fin de l'analyse par l'unité de traitement 5 de l'ensemble de l'environnement radio qui est accessible à la passerelle cellulaire 1, les informations suivantes sont connues :
- un indicateur CELLULES UTILISABLES qui pourra prendre les valeurs PLEIN ou VIDE selon qu'au moins une ou aucune cellule utilisable par l'unité de traitement 5 n'ait été découverte ;
- optionnellement, la liste exhaustive des cellules utilisables découvertes et leurs caractéristiques ;
- un indicateur ANTENNE_A_DEPLIER qui pourra prendre les valeurs :
   o VRAI si au moins une cellule utilisable a été découverte dans une bande pleinement exploitée par l'antenne 10 dépliée mais qui aurait pu être découverte fortuitement alors que l'antenne 10 était repliée ;
   o FAUX si aucune cellule utilisable n'a été découverte dans une telle bande.

On note que, dès lors qu'au moins une cellule utilisable aura été découverte (étape E10) et que son éligibilité à l'étape E12 aura été déterminée, le processus peut directement être dérouté vers l'étape finale E17.

La mise en œuvre de la suite du procédé, et notamment de la poursuite du balayage de fréquences, est optionnelle et non essentielle à partir du moment où une cellule utilisable est découverte.

En effet, selon les implémentations, la passerelle 1 peut déclencher une synchronisation avec le réseau dès lors qu'elle a découvert sa première cellule utilisable Cu, ou bien elle peut attendre de constituer une liste pour la classer, et ainsi sélectionner celle qui aura les meilleures conditions pour y établir une communication.

La poursuite du balayage permet notamment de détecter dès cette étape l'indicateur « ANTENNE_A_DEPLIER » après avoir balayé l'ensemble du spectre jusqu'aux basses fréquences alors même qu'une cellule utilisable Cu aurait été découverte dans les hautes fréquences en début de scan.

Comme on l'a vu, les étapes de configuration comprennent aussi l'étape, si nécessaire, de réaliser une action ayant pour but de faire passer le système **d'antenne** 6 dans la première configuration. Cette étape peut être réalisée dès que l'indicateur « ANTENNE_A_DEPLIER » prend la valeur « VRAI **»,** et sera décrite plus bas.

La phase préliminaire P0 comprend en outre l'étape de synchroniser la passerelle cellulaire 1 avec le réseau cellulaire 3 en utilisant l'une des cellules utilisables Cu. Après l'étape E17, la passerelle 1 met en œuvre la synchronisation sur le réseau cellulaire 3 de l'opérateur en utilisant l'une des cellules utilisables Cu qu'elle a détectées. La passerelle 1 arrive ainsi dans un état de *camped normally* selon les modalités prévues par la norme (normalisation de référence disponible sur le site www.3gpp.org) grâce au mécanisme de sélection de cellule *(cell selection).*

La passerelle 1 est désormais synchronisée sur le réseau **3.** Dès lors que cette activation a abouti, le cœur de réseau de l'opérateur, via son réseau d'eNodeB pour un réseau de type LTE ou son réseau de gNB pour un réseau de type 5G (stations de base radio) aura la charge de commander la passerelle 1 pour lui donner des directives en vue d'améliorer la communication en temps quasi-réel.

Le procédé de gestion comprend de plus au moins une phase courante au cours de laquelle les étapes de configuration sont mises en œuvre. Les phases courantes peuvent être répétées lorsque la passerelle 1 est en opération (tout comme la phase préliminaire P0 d'ailleurs, comme on le verra plus bas).

L'étape de détection, au cours de ces phases courantes, ne met pas en œuvre un balayage de fréquence comme c'est le cas pour la phase préliminaire P0. L'unité de traitement 5 détecte au moins une cellule utilisable Cu en exploitant au moins une information provenant du réseau cellulaire **3.**

En effet, dès lors que la passerelle cellulaire 1 est synchronisée avec le réseau cellulaire 3 (dans l'état *camped normaly* au sens de la norme), celui-ci va piloter la passerelle cellulaire 1 pour lui faire exécuter un certain nombre d'opérations nécessaires au maintien du lien de communication dans les conditions les plus adaptées aux conditions environnementales (choix de la station de base, choix de la cellule, des paramètres physiques de l'émetteur de la passerelle cellulaire, etc.). Pour ce faire, le réseau 3 exploite un certain nombre de messages protocolaires.

Dans une première phase courante P1 optionnelle, la au moins une information peut ainsi comprendre une demande de transfert intercellulaire vers une cellule cible Cc du réseau cellulaire 3.

Une catégorie de message protocolaire porte donc sur une demande explicite émanant du cœur de réseau qui force la passerelle cellulaire 1 à tenter de se connecter à une autre cellule de son environnement immédiat. Cette procédure est décrite dans la norme précédemment évoquée comme une procédure de *handover.* Elle est engagée par le réseau 3 dès lors que celui-ci fait face à une surcharge, ou que les conditions de propagation avec la cellule ne sont plus satisfaisantes.

Le gestionnaire du cœur de réseau détient et exploite les informations d'implantation géographique des stations de base de son propre réseau et des caractéristiques de chacune d'elles. Il est donc à même de présager de la présence des cellules qu'il exploite dans une zone potentiellement située dans l'horizon local comprenant l'ensemble des stations de base à portée radio de la passerelle cellulaire 1.

La demande de transfert intercellulaire peut être une demande indirecte. Il peut s'agir d'une demande de mesures visant à recevoir des informations de mesure. La commande émise par le cœur de réseau est par exemple la commande *RRC connection reconfiguration,* qui comprend le champ *RRC measurement.* L'exploitation de cette demande permet, à l'aide des informations de mesure demandées par le cœur de réseau, de connaitre le canal fréquentiel de la cellule cible Cc.

Comme le gestionnaire du réseau connaît la position des cellules C du réseau 3, la réception d'une demande de transfert intercellulaire vers une cellule cible Cc permet indirectement à la passerelle 1 de détecter cette cellule cible comme étant une cellule utilisable Cu.

L'exploitation de cette demande de mesure de cellule est donc un indicateur fiable de la présence de ladite cellule dans une zone géographique entourant la passerelle cellulaire 1 à une distance potentiellement compatible avec la mise en place d'une communication.

Avantageusement, cette demande de transfert intercellulaire est également un indicateur d'une condition de communication perfectible.

Dès lors que la passerelle cellulaire 1 reçoit une telle commande de *handover* vers une cellule C dont le canal correspond à une exploitation dégradée par le système 10 avec l'antenne 6 en position repliée, alors l'indicateur global ANTENNE_A_DEPLIER sera positionné à la valeur VRAI.

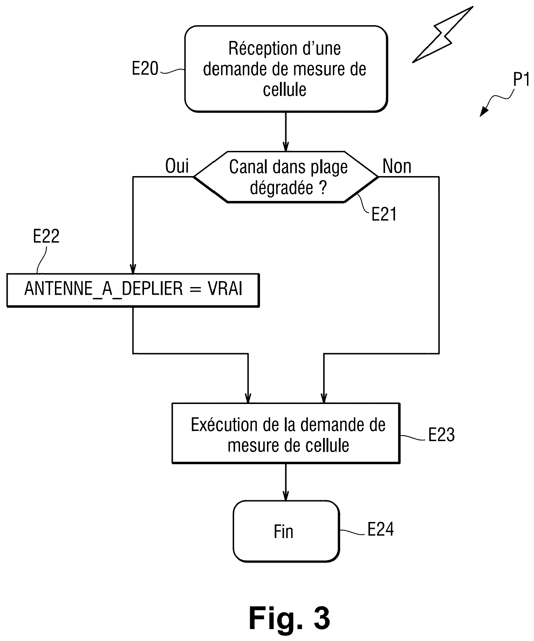

En référence à la figure 3, la première phase courante P1 débute par l'étape E20.

La passerelle 1 reçoit une demande de mesure sur une cellule cible Cc. L'unité de traitement 5 détecte ainsi que cette cellule cible Cc est une cellule utilisable Cu.

L'unité de traitement 5 détermine si cette cellule utilise au moins partiellement la bande de fréquences particulière : étape E21 (donc s'il s'agit d'une cellule utilisable particulière).

Si c'est le cas, l'unité de traitement 5 confère à l'indicateur ANTENNE_A_DEPLIER la valeur VRAI : étape E22. Le procédé passe à l'étape E23. A l'étape E21, si la cellule n'utilise pas la bande de fréquences particulière, le procédé passe à l'étape E23 directement.

La passerelle 1 exécute la demande du réseau (par exemple les mesures sur la cellule). La première phase courante P1 s'achève : étape E24.

Dans une deuxième phase courante P2 optionnelle, la au moins une information, provenant du réseau 3 et permettant à la passerelle 1 de détecter au moins une cellule utilisable Cu, peut aussi comprendre une information indiquant la présence d'au moins une cellule voisine Cv du réseau cellulaire 3 située dans une même zone géographique que la passerelle cellulaire 1.

Dès lors qu'elle est synchronisée avec le réseau cellulaire 3 de l'opérateur, la passerelle cellulaire 1 est à même de recevoir, et donc d'exploiter les blocs d'information système (SIB) contenus dans le canal logique *Broadcast Control Channel* (BCCH) reçu en permanence de la cellule considérée.

Le gestionnaire du cœur de réseau détient et exploite les informations d'implantation géographique des stations de base de son propre réseau et des caractéristiques de chacun d'eux. Il a donc la connaissance des cellules qu'il exploite dans une zone potentiellement située dans l'horizon local comprenant l'ensemble des stations de base à portée radio de la passerelle cellulaire 1.

La passerelle 1, en exploitant en particulier les champs SIB3 *(Intra Frequency Cell Reselection),* et/ou SIB4 *(Intra Frequency Neighbour Cell)* et/ou SIB5 *(Inter Frequency Neighbour Cell),* est donc à même de détecter la présence dans son voisinage d'une cellule voisine Cv appartenant au réseau 3 de l'opérateur et utilisant une moins une fréquence appartenant à une plage ou bande de fréquences aux performances dégradées par le repliement de l'antenne 10 du système d'antenne 6.

Dès lors qu'une telle cellule voisine Cv est détectée, alors l'indicateur global ANTENNE_A_DEPLIER sera positionné à la valeur VRAI.

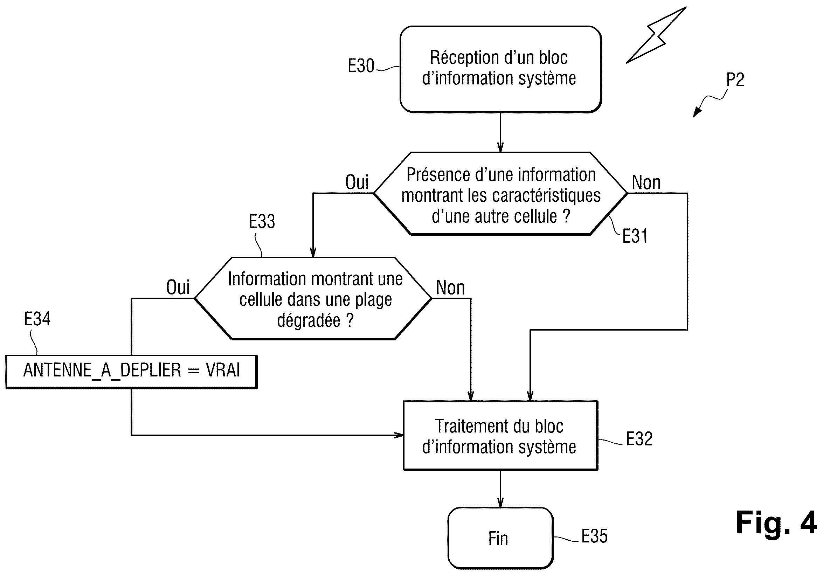

En référence à la figure 4, la deuxième phase courante P2 débute par l'étape E30. La passerelle 1 reçoit du cœur du réseau un bloc d'information système.

L'unité de traitement 5 détermine si ce bloc d'information système comprend une information relative à la présence d'au moins une cellule voisine Cv du réseau cellulaire 3 située dans une même zone géographique que la passerelle cellulaire 1 : étape E31

Si ce n'est pas le cas, le procédé passe directement à l'étape E32.

Si c'est le cas, l'unité de traitement 5 détermine si cette cellule voisine Cv utilise au moins partiellement la bande de fréquences particulière (en utilisant les informations transmises par le réseau 3) : étape E33.

Si ce n'est pas le cas, le procédé passe à l'étape E32.

Si c'est le cas, alors l'unité de traitement 5 confère à l'indicateur ANTENNE_A_DEPLIER la valeur VRAI : étape E34.

Le procédé passe à l'étape E32.

La passerelle cellulaire 1 réalise le traitement du bloc d'information système.

Le procédé passe à l'étape E35 et s'achève.

Comme on l'a vu, les étapes de configuration, pouvant être mises en œuvre au cours de la phase préliminaire P0 ou au cours d'une phase courante P1 ou P2, comprennent l'étape, si nécessaire, de réaliser une action ayant pour but de faire passer le système d'antenne 6 dans la première configuration.

Les procédés précédemment décrits ont mis en évidence diverses méthodes pour positionner l'indicateur ANTENNE_A_DEPLIER à partir de différentes situations rencontrées par la passerelle cellulaire 1 lors de son exploitation.

Dès lors que cet indicateur passe de la valeur par défaut « FAUX » à la valeur «VRAI», alors l'unité de traitement 5 a mis en évidence que l'antenne 10 du système d'antenne 6 qui se trouve dans sa position repliée, devrait avantageusement être dépliée pour exploiter l'ensemble de la bande de fréquences de manière optimale.

En particulier, le dépliage (ou dépliement) de l'antenne 10 du système d'antenne 6 permettrait d'améliorer sensiblement les performances de communication pour des fréquences qui sont exploitées activement par le réseau 3 dans un environnement proche de l'utilisateur.

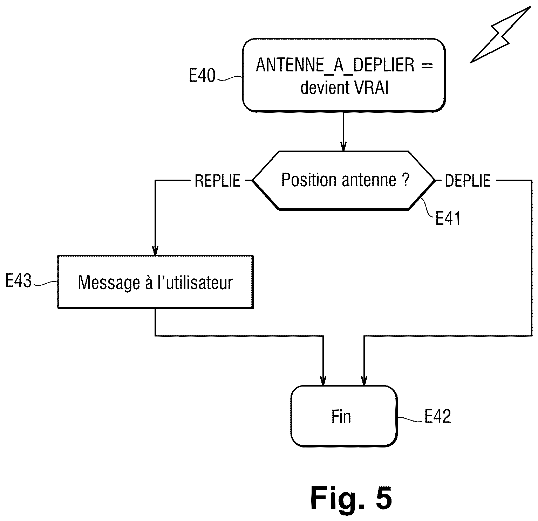

On voit sur la figure 5 un exemple d'implémentation d'un procédé destiné à proposer à l'utilisateur de déplier l'antenne 10 du système d'antenne 6.

Le procédé débute à l'étape E40. L'unité de traitement 5 fait passer l'indicateur ANTENNE_A_DEPLIER de la valeur FAUX à la valeur VRAI (transition).

L'unité de traitement 5 utilise le capteur 11 pour déterminer la configuration réelle du système d'antenne 6 : étape E41.

Si celui-ci se trouve dans la première configuration (antenne 10 dépliée), le procédé passe à l'étape E42 et s'achève.

Si celui-ci se trouve dans la deuxième configuration (antenne 10 repliée), l'unité de traitement 5 réalise l'action ayant pour but de faire passer le système d'antenne 6 dans la première configuration : étape E43. Puis, le procédé passe à l'étape E42 et s'achève.

Cette action consiste par exemple à émettre une notification à destination de l'utilisateur pour lui notifier la situation et l'inviter à configurer le système d'antenne 6 selon la première configuration, c'est-à-dire à déplier l'antenne 10 du système d'antenne 6.

Cette notification peut prendre différentes formes, telles qu'un message sur un afficheur de la passerelle cellulaire 1, une indication lumineuse sur la passerelle cellulaire 1, une notification sonore, une indication sur une page de configuration de la passerelle, un SMS, un email, etc.

Par exemple un message tel que « Les performances de la passerelle cellulaire pourraient être améliorées. Pour cela, il est préférable de déplier le système d'antenne » pourrait être envisagé.

L'exploitation normale de la passerelle 1 reprend alors immédiatement sans attendre d'action immédiate de l'utilisateur. La reconfiguration n'est donc pas obligatoire, l'utilisateur peut très bien ne pas reconfigurer le système d'antenne 6, par exemple parce qu'il ne voit pas le message, ou bien parce qu'il est satisfait des performances d'exploitation « dégradées » de sa passerelle 1 et qu'il ne souhaite pas déplier l'antenne 10.

Avantageusement, pour éviter une répétition des notifications, l'unité de traitement 5 attend un délai relativement élevé avant d'émettre une seconde notification. Ce délai est typiquement compris entre 1 et 24 heures.

Au contraire, pour aider à la prise en compte des notifications, l'unité de traitement 5 attend un délai relativement court avant d'émettre une seconde notification. Ce délai est typiquement compris entre 1 et 60 minutes.

Il peut également être mis en place une étape de confirmation de prise en compte de l'utilisateur par une action explicite (case à cocher, validation, etc.) visant à accepter le fait que l'utilisateur ne souhaite pas déplier l'antenne 10 du système d'antenne 6 et qu'il accepte de fait les conditions d'exploitation dégradées.

On note qu'il existe des cas spécifiques qui mettent en évidence des conditions difficiles qui pourraient être notablement améliorées en dépliant l'antenne 10 du système d'antenne 6.

Par exemple, dès lors que l'indicateur CELLULES UTILISABLES a pour valeur la valeur VIDE (étape E18, figure 2) et que l'antenne 10 du système d'antenne 6 est dans la position repliée, alors les conditions suffisantes de communication avec le système d'antenne 6 dans sa deuxième configuration ne sont pas réunies.

Dans ce cas, la passerelle cellulaire 1 est inutilisable avec l'antenne 10 position repliée.

Un autre cas critique concerne la situation mise en évidence à l'étape E22 de la figure 3, alors que la demande de mesure de cellule concerne un canal dont la fréquence appartient à une plage de fréquences aux performances dégradées par le repliement du système d'antenne 6.

Dans ce cas, la passerelle cellulaire 1 ne permet pas de répondre correctement aux injonctions du cœur de réseau *(handover)* avec l'antenne 10 en position repliée.

Avantageusement, ces deux cas peuvent faire l'objet d'une notification particulière à l'utilisateur, différente de celle précédemment décrite. Cette notification différente permet d'améliorer nettement la disponibilité de la passerelle cellulaire 1 car la probabilité que la reconfiguration soit effectivement réalisée est plus importante.

La notification peut être proche de la précédente, mais en y ajoutant un caractère plus péremptoire telle qu'une couleur, un signal sonore, un vocabulaire plus adapté à un niveau d'alerte.

Par exemple un message tel que « Les performances de l'équipement sont insuffisantes. Le système d'antenne doit obligatoirement être déplié pour permettre une communication » pourrait être envisagé.

Avantageusement, pour éviter une répétition des notifications, l'unité de traitement 5 attend un délai relativement élevé avant d'émettre une seconde notification. Ce délai est typiquement compris entre 1 et 24 heures.

Au contraire, pour aider à la prise en compte des notifications, l'unité de traitement 5 attend un délai relativement court avant d'émettre une seconde notification. Ce délai est typiquement compris entre 1 et 60 minutes.

A nouveau, il peut également être mis en place une étape de confirmation de prise en compte de l'utilisateur par une action explicite (case à cocher, validation, etc.) visant à accepter le fait que l'utilisateur ne souhaite pas déplier le système d'antenne 6 et qu'il accepte de fait les conditions d'exploitation dégradées.

On note aussi que l'utilisateur peut, à tout moment, décider de modifier la configuration du système d'antenne 6. Cette action peut être la conséquence d'une notification ou d'une alerte présentée par l'exploitation de la passerelle 1 comme il a été décrit précédemment, mais elle peut aussi être le fait d'une décision arbitraire.

Comme il a été décrit à l'étape E3 de la figure 2, l'unité de traitement 5 peut évaluer la position de l'antenne 10 du système d'antenne 6 et est donc à même de détecter une modification de la configuration du système d'antenne 6.

Lorsque la configuration du système d'antenne 6 est modifiée par l'utilisateur, l'exploitation de la passerelle 1 telle qu'elle a été décrite ici peut se poursuivre, et le système de communication dans son ensemble convergera vers les meilleures conditions de communication.

Toutefois, avantageusement, une resynchronisation complète avec le réseau 3 permettrait de converger plus rapidement en découvrant prioritairement les cellules C dont les fréquences sont les plus adaptées aux performances du système d'antenne 6 dans sa position courante.

Il est donc envisageable lorsque ce basculement a été détecté, de notifier l'utilisateur tel que décrit dans les paragraphes précédents, mais en lui proposant une resynchronisation.

Ainsi, lorsque l'unité de traitement 5 détecte que l'utilisateur a de lui-même modifié la configuration du système d'antenne 6, l'unité de traitement 5 émet une notification à destination de l'utilisateur pour lui proposer de réitérer la phase préliminaire P0 (de la figure 2).

Par exemple, un message tel que « La géométrie du système d'antenne vient d'être modifiée, souhaitez-vous relancer une synchronisation avec le réseau pour profiter d'une prise en charge rapide des conditions de communication ? » pourrait être envisagé.

Dès lors que l'utilisateur accepte la resynchronisation, alors la phase préliminaire P0 est relancée.

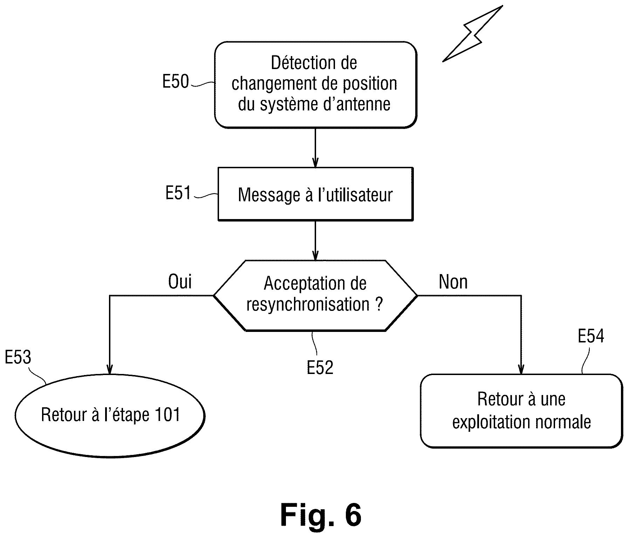

En référence à la figure 6, le procédé suivant est mis en œuvre.

L'unité de traitement 5 détecte la modification de la configuration du système d'antenne 6 : étape E50.

L'unité de traitement 5 transmet une notification à l'utilisateur, lui proposant de réitérer la phase préliminaire P0 (et donc de réaliser une resynchronisation) : étape E51.

L'unité de traitement 5 détermine si la resynchronisation est acceptée : étape E52. Si c'est le cas, le procédé passe à l'étape E2 du procédé de la figure 2 : étape E53. Sinon, le procédé s'achève et la passerelle 1 retourne à une exploitation normale : étape E54.

Lorsqu'une resynchronisation est acceptée, après le retour à l'étape E2, la phase préliminaire P0 peut être optimisée en exploitant la liste exhaustive des cellules utilisables Cu qui a été établie lors de la phase préliminaire P0 précédente. En effet, un balayage réalisé avec l'antenne 10 du système d'antenne 6 en position repliée, analysant un canal dans une plage dégradée, c'est-à-dire par exemple un balayage réalisé dans des bandes proches de 700 MHz alors que l'antenne est une antenne 700 MHz et qu'elle est repliée, peut avoir identifié une ou plusieurs cellules utilisables Cu. Ceci indique que la ou les cellules utilisables Cu identifiées sont géographiquement très proches car malgré l'état replié de l'antenne 10, celle-ci est à même de trouver des cellules utilisables Cu. Une optimisation de la phase préliminaire P0 dans ce cas de figure serait d'effectuer un balayage en fonction des cellules utilisables précédemment identifiées.

Le balayage de fréquence réalisé au cours de la réitération de la phase préliminaire P0 utilise donc une liste de cellules utiles Cu détectées au cours d'une phase préliminaire P0 précédente.

Une autre optimisation possible de la phase préliminaire lorsqu'une resynchronisation est acceptée, est d'exploiter les informations transmises par la cellule active dans les SIB3 SIB4 SIB5 lors de la deuxième phase courante P2 (figure 4). Ces informations ont été au préalable mémorisées. Par exemple, les cellules voisines indiquées dans les informations SIB5 sont mémorisées, en particulier les cellules dont les bandes de fréquences sont concernées par le fonctionnement de l'antenne repliée. Une optimisation de la phase préliminaire P0, dans ce cas de figure, serait d'effectuer un balayage en fonction des informations de cellules voisines précédemment enregistrées.

Le balayage de fréquence réalisé au cours de la réitération de la phase préliminaire P0 utilise donc des informations obtenues au cours d'une deuxième phase P2 précédemment réalisée.

Bien entendu, l'invention n'est pas limitée au mode de réalisation décrit mais englobe toute variante entrant dans le champ de l'invention tel que défini par les revendications.

L'équipement terminal, dans lequel est mis en œuvre le procédé de gestion, n'est pas nécessairement une passerelle cellulaire. Le procédé de gestion peut être mis en œuvre dans tout équipement intégrant la technologie d'accès au réseau cellulaire. Il pourrait s'agir par exemple d'un ordinateur portable, d'une tablette, d'un *smartphone,* etc.

On a décrit ici que le système d'antenne comprend une antenne. Le système d'antenne pourrait en comprendre plusieurs.

Le système d'antenne pourrait comprendre un réseau d'antennes, par exemple à 700 MHz, pour faire du MIMO.

Le système d'antennes peut être constitué de plusieurs antennes couvrant chacune une partie du spectre dont les signaux sont combinés au moyen d'un diplexeur. Dans ce cas, la fonction de « repliement » peut ne concerner que les antennes de grande dimension destinées à fonctionner dans les fréquences basses. A nouveau, le système d'antennes dans sa position dépliée a une efficacité maximale dans la totalité du spectre prévu, alors que dans sa position repliée, son efficacité se trouve réduite dans une partie du spectre.

Comme on l'a vu, le système d'antenne peut être configuré selon au moins deux configurations : une première configuration présentant des premières performances de communication dans au moins une bande de fréquences particulière, et une deuxième configuration présentant des deuxièmes performances de communication inférieures aux premières performances dans la au moins une bande de fréquences particulière.

La bande de fréquences particulière n'est pas obligatoirement une bande de basses fréquences.

Les différentes configurations ne correspondent pas nécessairement à un système d'antenne replié ou déplié. Dans un exemple, il pourrait aussi s'agir de la connexion ou non d'une ou de plusieurs antennes, via un ou des *switchs,* sans modification géométrique ou dimensionnelle du système d'antenne.

Le système d'antenne pourrait comprendre au moins une antenne non intégrée dans la passerelle cellulaire et agencée pour être connectée à la passerelle cellulaire. La passerelle cellulaire pourrait par exemple intégrer un dispositif d'antenne interne (comprenant une ou des antennes), et pourrait être optionnellement connectée à un dispositif d'antenne externe amovible (comprenant une ou des antennes). Le système d'antenne peut donc alors être configuré selon une première configuration dans laquelle il comprend le dispositif d'antenne interne et le dispositif d'antenne externe (et donc dans laquelle le dispositif d'antenne externe est connecté à la passerelle), et selon une deuxième configuration dans laquelle il comprend uniquement le dispositif d'antenne interne (et donc dans laquelle le dispositif d'antenne externe n'est pas connecté à la passerelle).

L'action, réalisée par l'unité de traitement et ayant pour but de faire passer le système d'antenne dans la première configuration, pourrait être différente de celle décrite ici.

Dans l'exemple décrit ci-avant où le système d'antenne met en œuvre des interrupteurs (ou switches) pour l'activation et la désactivation d'une ou plusieurs antennes, sans modification géométrique ou dimensionnelle du système d'antenne 6, l'unité de traitement 5 est configurée pour commander, en fonction de la décision prise, le(s) interrupteur(s) de manière à connecter l'antenne dont les performances sont dégradées (e.g à 700 MHz).

Selon un autre exemple, l'unité de traitement est configurée pour ajuster le régime d'amplification des amplificateurs (e.g. amplificateur de puissance *(Power Amplifier «* PA »), ou amplificateur à faible bruit *(Low Noise Amplifier* « LNA »)), de la chaine radiofréquence de l'antenne 10 du système d'antenne 6. La deuxième configuration correspond à une « sous-alimentation » des PA dégradant les performances de l'antenne 10 en ce que ses performances de réception s'en trouvent dégradées, la rendant moins susceptible de détecter nominalement sa bande de fréquences opérationnelle. La première configuration correspond à une alimentation nominale des PA, rendant l'antenne 10 nominalement opérationnelle en réception dans sa bande de fréquences. En fonction de la décision prise, l'unité de traitement 5 est configurée pour passer l'antenne 10 de sa deuxième configuration à sa première configuration en ajustant le régime d'amplification. Ainsi, en mode « replié », les antennes sont moins performantes parce que les amplificateurs fonctionnent en mode dégradé. Si la décision « antenne à déplier » est prise, automatiquement les amplificateurs sont configurés en mode nominal.

Les moyens de détection de la configuration du système d'antenne ne comprennent pas nécessairement un capteur de position. Il pourrait s'agir par exemple d'un capteur mesurant une grandeur électrique (courant, tension) dépendant de la configuration du système d'antenne.

## Revendications

1. Procédé de gestion d'un équipement terminal (1) d'un réseau cellulaire prédéfini (3), l'équipement terminal (1) comprenant une unité de traitement (5) agencée pour coopérer avec un système d'antenne (6) pouvant être configuré selon au moins une première configuration et une deuxième configuration, la deuxième configuration présentant des performances de communication dégradées sur au moins une bande de fréquences particulière, le procédé de gestion étant mis en œuvre dans l'unité de traitement (5) et comportant les étapes de configuration suivantes :
- détecter au moins une cellule utilisable (Cu) pouvant être utilisée pour connecter l'équipement terminal (1) au réseau cellulaire prédéfini (3) ;
- déterminer si au moins une cellule utilisable particulière (Cup), parmi la au moins une cellule utilisable (Cu), utilise au moins partiellement la bande de fréquences particulière ;
- si c'est le cas, et si le système d'antenne (6) est configuré selon la deuxième configuration, réaliser une action ayant pour but de faire passer le système d'antenne (6) dans la première configuration,
la au moins une première configuration et deuxième configuration correspondant à :
- un système d'antenne replié ou déplié, ou
- des configurations géométriques ou dimensionnelles différentes, ou
- une connexion ou non d'une ou de plusieurs antennes, via un ou des interrupteurs, sans modification géométrique ou dimensionnelle du système d'antenne, ou
- une connexion ou non d'un dispositif d'antenne externe amovible à l'équipement terminal, ou
- des régimes d'amplification différents d'amplificateurs d'une chaîne radiofréquence du système d'antenne.

2. Procédé de gestion selon la revendication 1, comprenant une phase préliminaire (P0) au cours de laquelle les étapes de configuration sont mises en œuvre, la phase préliminaire comprenant en outre l'étape de synchroniser l'équipement terminal (1) avec le réseau cellulaire (3) en utilisant l'une des cellules utilisables (Cu).

3. Procédé de gestion selon la revendication 2, dans lequel, au cours de la phase préliminaire (P0), l'unité de traitement (5) réalise un balayage de fréquences pour détecter la au moins une cellule utilisable (Cu).

4. Procédé de gestion selon la revendication 3, dans lequel la bande de fréquences particulière est une bande de basses fréquences, et dans lequel, au cours de la phase préliminaire (P0), l'unité de traitement (5) est agencée pour :
- déterminer si le système d'antenne (6) est configuré selon la première configuration ou la deuxième configuration ;
- si le système d'antenne (6) est configuré selon la première configuration, réaliser le balayage de fréquence selon des fréquences croissantes ;
- si le système d'antenne (6) est configuré selon la deuxième configuration, réaliser le balayage de fréquence selon des fréquences décroissantes.

5. Procédé de gestion selon l'une des revendications 2 à 4, comprenant de plus les étapes de détecter qu'un utilisateur a volontairement modifié la configuration du système d'antenne (6) et, si c'est le cas, de lui transmettre une notification pour lui proposer de réitérer la phase préliminaire (PO).

6. Procédé de gestion selon les revendications 3 et 5, dans lequel le balayage de fréquence réalisé au cours de la réitération de la phase préliminaire (P0) utilise une liste de cellules utiles (Cu) détectées au cours d'une phase préliminaire (P0) précédente.

7. Procédé de gestion selon l'une des revendications précédentes, comprenant au moins une phase courante (P1 ; P2) au cours de laquelle les étapes de configuration sont mises en œuvre, l'unité de traitement (5) détectant au moins une cellule utilisable (Cu) en exploitant au moins une information provenant du réseau cellulaire (3).

8. Procédé de gestion selon la revendication 6, la au moins une phase courante comprenant une première phase courante (P1) au cours de laquelle la au moins une information comprend une demande de transfert intercellulaire vers une cellule cible (Cc) du réseau cellulaire (3).

9. Procédé de gestion selon la revendication 7 ou 8, la au moins une phase courante comprenant une deuxième phase courante (P2) au cours de laquelle la au moins une information comprend une information indiquant la présence d'au moins une cellule voisine (Cv) du réseau cellulaire (3) située dans une même zone géographique que l'équipement terminal (1).

10. Procédé de gestion selon les revendications 5 et 9, dans lequel le balayage de fréquence réalisé au cours de la réitération de la phase préliminaire (P0) utilise des informations obtenues au cours d'une deuxième phase (P2) précédente.

11. Procédé de gestion selon l'une des revendications précédentes, dans lequel l'action comprend la transmission d'une notification à un utilisateur de l'équipement terminal (1) pour l'inviter à configurer le système d'antenne (6) selon la première configuration.

12. Equipement terminal (1) comportant une unité de traitement (5) agencée pour coopérer avec un système d'antenne (6) pouvant être configuré selon au moins une première configuration et une deuxième configuration, la deuxième configuration présentant des performances de communication dégradées sur au moins une bande de fréquence particulière, le procédé de gestion selon l'une des revendications précédentes étant mis en œuvre dans l'unité de traitement (5).

13. Equipement terminal (1) selon la revendication 12, comprenant un capteur de position (11) agencé pour détecter si le système d'antenne (6) est configuré selon la première configuration ou selon la deuxième configuration.

14. Equipement terminal selon la revendication 12 ou 13, l'équipement terminal étant une passerelle cellulaire.

15. Système comportant l'équipement terminal (1) selon l'une des revendications 12 à 14, et le système d'antenne (6).

16. Système selon la revendication 15, le système d'antenne (6) étant intégré dans l'équipement terminal (1).

17. Système selon la revendication 15, le système d'antenne comprenant au moins une antenne non intégrée dans l'équipement terminal et agencée pour être connectée à l'équipement terminal.

18. Programme d'ordinateur comprenant des instructions de code de programme pour l'exécution des étapes du procédé de gestion selon l'une des revendications 1 à 11 lorsque ledit programme est exécuté sur un ordinateur.

19. Support d'enregistrement lisible par ordinateur, sur lequel est enregistré le programme d'ordinateur selon la revendication 18.
